# EUROPEAN PATENT SPECIFICATION

(11) **EP 4 061 195 B1**
(45) Date of publication and mention of the grant of the patent: **14.05.2025**
(21) Application number: 20812405.7
(22) Date of filing: 18.11.2020
(51) Int. Cl.: A47L 11/40, A47L 7/00, F16K 31/20, F16K 1/14

(54) **FLOAT VALVE**
SCHWIMMERVENTIL
ROBINET À FLOTTEUR

(30) Priority: 19.11.2019 GB 201916830
(43) Date of publication of application: 28.09.2022
(73) Proprietor: NUMATIC INTERNATIONAL LIMITED, Camberley Surrey GU15 3SY (GB)
(72) Inventor: PUTT, Nicholas, Chard, Somerset TA20 2GB (GB)
(74) Representative: Cleveland Scott York
(86) International application number: PCT/GB2020/052932
(87) International publication number: WO 2021/099771

(56) References cited:
- AT-B- 339 243
- US-A- 2 863 524
- US-A- 3 082 465
- US-A- 3 290 865
- US-A- 5 353 469

## Description

The present invention relates to the field of floor treatment machines and in particular wet vacuuming machines, wet carpet cleaning machines or wet floor scrubbing machines. These include a vacuum suction drive in fluid communication with a dirty water collection tank via a suction port. The suction port is typically located in an upper region of the dirty water tank. The port is usually provided with a suction shut-off valve which responds to a threshold water level being reached, such as a float valve. The present invention seeks to provide an improved float valve for use in such machines.

Known float valves comprise a hollow plastic ball float disposed in an elongate vertically oriented cylindrical mesh cage. The cage upper end has a collar which engages with a downwardly facing tubular suction port. As the tank approaches a full water level, the ball floats upwards in its cage until it is seated against the end of the suction port, thereby blocking the port and ceasing suction in the chamber defined above the water level. One problem with this arrangement is that the ball shut-off level tends to be too close to the suction port; the shut-off occurs when the water level is less than the ball diameter from the suction port, which may typically be only several centimetres. This issue has been addressed by placing two balls in the cage, one on top of the other, so that double the distance from the suction port is achieved, but this is not a major improvement. The present invention seeks in one aspect to provide an improved float valve which permits a greater separation between water level and suction port when the suction port is shut-off.

Another problem is that sloshing water in the dirty water tank can give false-full shut-off events by the float ball being washed up into engagement with the suction port. Once engaged the ball is kept sucked in place, which requires the user to turn off the suction drive to permit the float ball to drop back down in the cage. This is a particular problem when the dirty water tank is mounted on a walk-behind machine with a generally vertical handle which may be pivoted up/down or side to side during normal operation and use. The present invention therefor seeks in another aspect to reduce or prevent false-full valve shut-offs.

US-A-5353469, US-A-2863524 and US3082465 disclose float valve assemblies for use in suction collection devices

According to one aspect of the invention there is provided a float valve assembly for a collection tank in a suction liquid collection device, the assembly comprising:
a float constrained in an enclosure which is configured to permit the float to rise in response to a rising liquid level,
a plunger which is disposed above the float so as to travel in an upwards direction when the float rises,
a closure feature projecting upwards from an upper end region of the plunger so as to travel upwards with the plunger,
wherein a suction port is disposed in the tank vertically spaced apart from the closure feature, the suction port being in fluid communication with a suction drive which in use draws air-entrained liquid into the collection tank,
the arrangement being such that as liquid fills the tank the liquid acts upon the float to cause the closure feature to travel towards the suction port, and when the closure feature rises sufficiently, the closure feature obturate the suction port, thereby closing the suction port and preventing further air-entrained liquid from entering.

The resilient connector may be a flexible rod or conveniently is an elongate coil spring. The resilient connector may be disposed substantially vertically, with lateral displacement corresponding to bending movement of the resilient connector. The suction port is laterally offset with respect to the plunger vertical travel direction so that as the plunger travels up, the closure feature is laterally displaced towards the suction port by the airflow into the port acting on the closure feature. In this way the closure is actuated not just by travel of the closure feature upwards, but also requires lateral movement towards the suction port. This avoids false shut-offs because an occasional rise of the float due to sloshing water in the tank does not necessarily cause the suction port to be shut off. Only if the suction induced airflow is also enough to cause the closure feature to move laterally does the closure feature move across to abut the suction port and close it. This increased airflow is only present when the tank is properly full so that the low-pressure chamber defined above the water level is small enough to provide a sufficiently increased airflow against the closure feature to displace it towards the suction port.

The suction port may comprise a tubular orifice. The closure feature preferably comprises a spherical surface having a diameter which is larger than the diameter of the tubular orifice. This ensures that the orifice is closed when the spherical surface is seated in the rim of the tubular orifice. The closure feature may comprise a substantially spherical ball, preferably a hollow ball.

The plunger may be accommodated in a substantially vertically oriented throat feature, which may be defined by a collar or shoulder at the upper region of the enclosure. The plunger may be a sliding fit in the throat feature, so that it can readily slide up and down in the throat with respect to the enclosure. The throat feature may comprise two axially (vertically) spaced apart annular bushes. The plunger may comprise an elongate substantially cylindrical member. The plunger may have a stop feature, such as an over-diameter end cap, for preventing excessive vertical travel of the plunger. There are preferably two stop features which provide upper and lower limited to plunger travel. These may be provided by lips or cap feature provided on the plunger.

The float may comprise a hollow shaped shell which provides buoyancy in water. The hollow shaped shell preferably comprises a ball. The float enclosure preferably comprises a cage in which the ball is free to roll upwards with rising liquid. Any configuration of cage may be used, so long as the cage provides lateral constraint for the ball but allowed it to travel vertically (within limits), and provided that water can readily enter the cage. Thus a mesh may be used, or a framework, a series of slots or a perforated sidewall, to name a few examples.

The float is typically not attached to the plunger. The float and plunger may be disposed so that in use the rising float abuts a lower region of the plunger so as to cause the plunger to travel upwards. In an alternative arrangement the float may be fixed to the plunger for travel therewith.

The float valve as hereinbefore described which may be configured as a self-contained device for fitting in a suction separator tank of floor cleaning machine, in the region of a suction port. In this case the device may be provided with a mounting bracket or flange. This mounting bracket or flange may be provided in the collar region of the enclosure.

In yet another aspect of the invention there is provided a wet vacuuming machine, a wet carpet cleaning machine or a wet floor scrubbing machine which includes a vacuum suction drive in fluid communication with a dirty water collection tank via a suction port located in an upper region of the tank, wherein a float valve as hereinbefore described is provided, mounted in the tank so as to act to close the suction port.

The machine will typically have a suction drive, a floor-facing working tool such as a nozzle, scrubbing brush or another agitator. There may be a clean water reservoir adapted to feed water onto a floor (with detergent) or carpet to effect cleaning. The dirty water may be lifted by airflow induced to flow through a floor-facing nozzle, which entrains the liquid into the airflow. The air-entrained water (and dirt particles) are dumped into the dirty water tank in the low-pressure chamber provided therein. The tank gradually fills with liquid and dirt as the airflow leaves the tank through the suction port. The float valve provides an automatic shut-off for the airflow by interrupting the flow into the suction drive. An auto cut-off may be provided for the suction motor which would otherwise surge with the absence of load on actuation of the shut-off valve.

As described above, the suction port maybe oriented with an opening which substantially faces laterally towards the position of the closure feature when the closure feature is at the limit of its upward travel. This is a particularly useful feature in the case of walk-behind floor scrubbing machines in which the dirty water tank is located on an upright handle portion. During use, the handle may be tilted up and down or laterally left and right. A partially full tank may have liquid sloshing around and could cause a premature shut-off as the water level surges from time to time. By requiring a lateral movement of the closure feature, in addition to simple buoyant travel, these false shut-offs can be avoided. This is because although the float may rise vertically, the airflow over the closure feature (e.g. ball) will not necessarily be enough to flex the flexible connection enough to permit the closure feature to block the suction port. Only when the tank is properly full will the airflow in the low-pressure chamber in the tank provide sufficient pressure to displace the closure feature into the suction port.

Following is a description by way of example only of one mode for putting the invention into effect.

In the drawings:
Figure 1 is a sectional side view of a float valve in accordance with the present invention.
Figure 2 is a schematic side view of the float valve in an open configuration.
Figure 3 is a side view of the float valve in an actuator position in which the float has risen due to influx of water.
Figure 4 is a schematic side view of the float in a closed configuration.

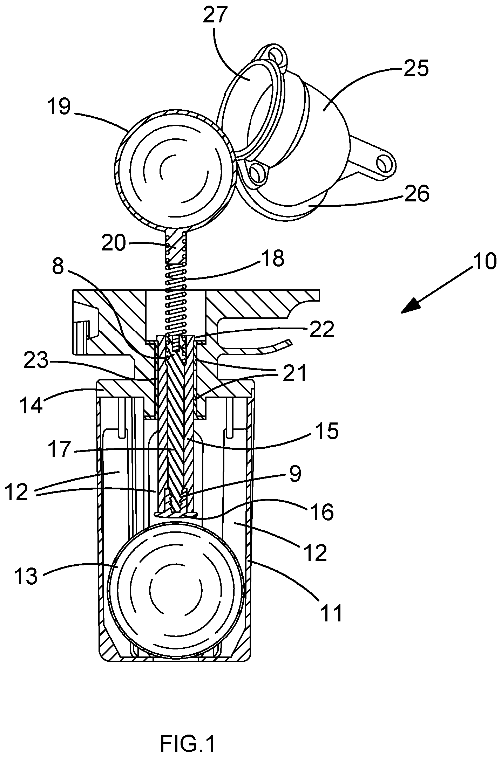

In figure 1 a float valve in accordance with the present invention is shown generally as 10. At a lower region of the float valve there is provided a generally cup shaped ball cage 11. The ball cage is provided with a plurality of cut outs through the side walls thereof shown as vertical slots 12 in figure 1. A lower end of the cage is closed so as to retain a riser ball float 13. Ball 13 is a hollow moulded plastics sphere having a diameter slightly less than the inner diameter of the ball cage. Thus the ball is constrained against any significant lateral motion in the cage, but is able to travel up and down within the cage (subject to any other constraints applied). An upper region of the cage is closed by a generally annular collar 14. The collar is provided with a central bore or throat 23 which accommodates a generally cylindrical elongate plunger assembly 15.

The plunger assembly includes a retaining end cap 16 at a lower end thereof. The end cap has an outer diameter slightly larger than that of the plunger 15. A central bore of the plunger is occupied by a spring locking pin 17. A lower end of the spring locking pin is retained by a screw threaded connection 9 made with a threaded bore in the retaining end cap 16. An upper end 8 of the spring locking pin 17 has a screw thread which retains a lower end of a coiled spring 18. An upper end region of the coiled spring is threaded onto a depending post 20 of a spherical, hollow closure ball 19.

In the axial bore of the collar 14 there are provided upper and lower sleeve bushes 21, each with an annular flange. These sleeve bushes are sized so as to facilitate sliding axial travel of the plunger 15 in the bore 23. Thus the plunger may move freely up and down. The extent of upward motion is limited by the abutment of the end cap 16 with the lower bush. An upper end region of the plunger is provided with an annular lip 22 which limits downward travel of the plunger by abutment with the upper bush 21.

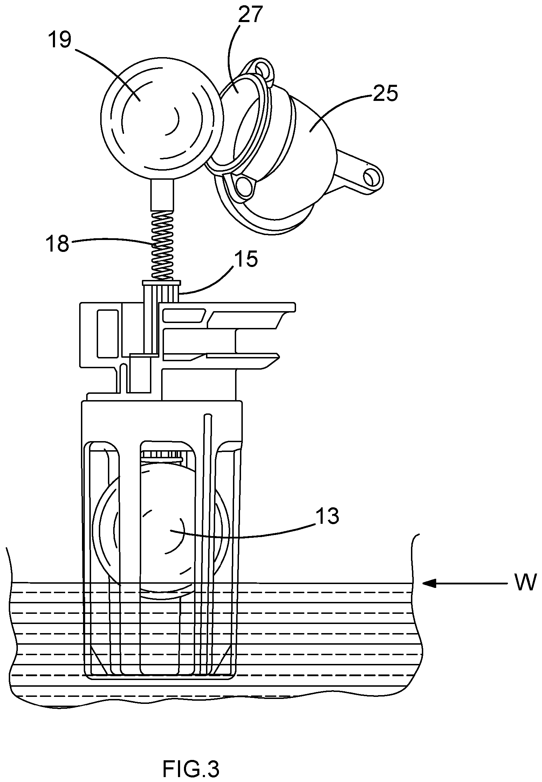

In a typical application, the float valve is mounted in a dirty water collection tank (not shown) of a vacuum suction separator for removing water from an incoming airflow. The airflow is typically lifted from a wet floor surface and comprises dirt and dirty water lifted during a cleaning process from a floor surface. As the liquid enters the low-pressure chamber represented by the dirty water tank, its velocity decreases rapidly and the water particles are then deposited in the tank. Over time the deposited liquid begins to fill the tank. The air drawn into the tank continues towards the suction drive motor via a suction separator port 25 shown in figure 1. The separator port is attached to an inner wall of the dirty water tank and communicates with the suction motor drive. As is best shown in figure 3, the separator port comprises an L form right angle tubular member with a base flange 26. An inlet orifice 27 is directed laterally towards the closure ball 19, with a slight incline upwards. The orifice 27 has a diameter which is slightly less than the diameter of the closure ball 19.

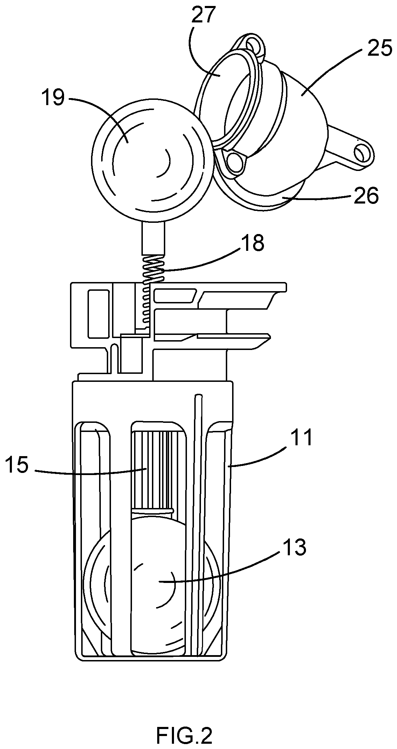

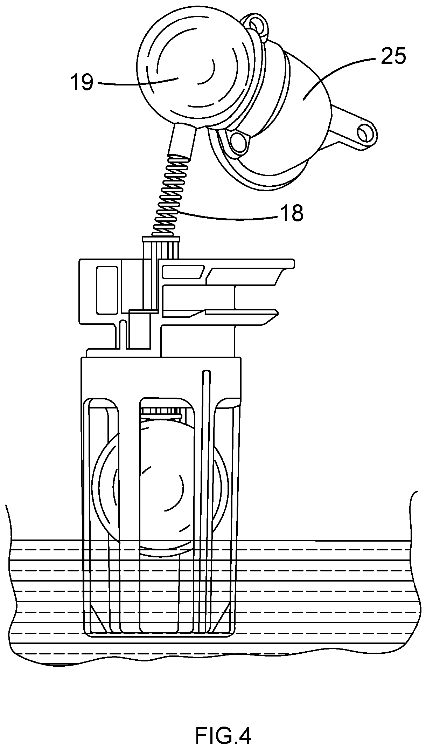

In figure 2 the float valve of figure 1 is shown in the fully open position. The riser ball 13 is resting on the bottom of the cage and the plunger 15 is resting on top of the riser ball. The closure ball 19 is standing up on the end of the vertical coil spring 18. In figure 3 a body of water has entered the tank and reached the level indicated by the arrow W. The buoyant raiser ball 13 has risen with the water level and has pushed the plunger 15 upwards. The coiled spring 18 and closure ball have correspondingly travelled upwards and the ball 19 is now at the same vertical level as the orifice 27 of the separator port 25. In figure 4 the ball 19 has travelled laterally so as to become seated in the circular orifice 27. The coil spring 18 has flexed to allow this lateral movement. The lateral movement is induced by the acceleration of the airflow around the ball as it passes the float and enters the orifice 27. The suction drive maintains the valve in a closed position by continuing to draw the ball 19 intimately against the orifice lip 27.

For the user of a floor cleaning machine the operation of the valve is automatic and closure indicates that the dirty water tank is full. The vacuum drive may then be turned off (or be subject to an auto-cut off) and the tank may be taken for emptying. As soon as the vacuum drive has been turned off the ball will retreat back laterally to the vertical orientation shown in figure 3, opening the suction port irrespective of the water level in the tank, or in fact of the orientation of the tank. Once the liquid is being emptied the water level W reduces and the riser ball 13 descends back to the bottom of the cage as shown in figure 2.

In summary, the present invention relates to the field of floor treatment machines which involve wet treatment of a floor or carpet and suction collection of dirty liquid. In one aspect there is provided a float valve assembly for a collection tank in a suction liquid collection device, the assembly comprising: a float constrained in an enclosure which is configured to permit the float to rise in response to a rising liquid level, a plunger which is disposed above the float so as to travel in an upwards direction when the float rises, a closure feature projecting upwards from an upper end region of the plunger so as to travel upwards with the plunger, wherein a suction port is disposed in the tank vertically spaced apart from the closure feature, the suction port being in fluid communication with a suction drive which in use draws air-entrained liquid into the collection tank, the arrangement being such that as liquid fills the tank the liquid acts upon the float to cause the closure feature to travel towards the suction port, and when the closure feature rises sufficiently, the closure feature obturates the suction port, thereby closing the suction port and preventing further air-entrained liquid from entering. The closure feature may be attached to the plunger by a resilient connector which permits the closure feature to be displaced laterally with respect to a plunger vertical travel direction.

## Claims

1. A float valve assembly (10) for a collection tank in a suction liquid collection device, the assembly comprising:
a float (13) constrained in an enclosure (11) which is configured to permit the float to rise in response to a rising liquid level (W),
a plunger (15) which is disposed above the float so as to travel in an upwards direction when the float rises,
a closure feature (19) projecting upwards from an upper end region of the plunger so as to travel upwards with the plunger, from an initial low position to an upper position,
wherein a suction port (25) is disposed in the tank vertically spaced apart from the closure feature when the closure feature is in its low position, the suction port being in fluid communication with a suction drive which in use draws air-entrained liquid into the collection tank,
wherein the closure feature (19) is attached to the plunger by a resilient connector (18) which permits the closure feature to be displaced laterally with respect to a plunger vertical travel direction,
the arrangement being such that as liquid fills the tank the liquid acts upon the float (13) to cause the closure feature to travel towards the suction port (25), and when the closure feature rises sufficiently, the closure feature obturates the suction port, thereby closing the suction port and preventing further air-entrained liquid from entering.

2. A float valve assembly as claimed in claim 1 wherein the resilient connector comprises an elongate coil spring (18).

3. A float valve assembly as claimed in claim 1 or 2 wherein the suction port (25) is laterally offset with respect to the plunger vertical travel direction so that as the plunger travels up the closure feature may be laterally displaced towards the suction port by the airflow into the port.

4. A float valve assembly as claimed in any of the preceding claims wherein the suction port comprises a tubular orifice (27) and the closure feature comprises a spherical surface (19) having a diameter which is larger than the diameter of the tubular orifice (27), so that the orifice is closed when the spherical surface becomes seated in the tubular orifice.

5. A float valve assembly as claimed in any of the preceding claims wherein the plunger is accommodated in a generally vertically oriented throat feature (23).

6. A float valve assembly as claimed in any of the preceding claims wherein the plunger (15) comprises an elongate generally cylindrical member.

7. A float valve assembly as claimed in any of the preceding claims wherein the plunger has a stop feature, such as an over-diameter end cap (16), for preventing excessive vertical travel of the plunger.

8. A float valve assembly as claimed in any of the preceding claims wherein the float comprises a hollow shaped shell (13).

9. A float valve assembly as claimed in claim 8 wherein the hollow shaped shell comprises a ball.

10. A float valve assembly as claimed in claim 9 wherein the float enclosure comprises a cage (11) in which the ball is free to float or roll upwards with rising liquid.

11. A float valve assembly as claimed in any of the preceding claims wherein the float is not attached to plunger and the float and plunger are disposed so that in use the rising float abuts a lower region of the plunger so as to cause the plunger to travel upwards.

12. A float valve assembly as claimed in any of claims 1 to 10 wherein the float is fixed to the plunger for travel therewith.

13. A float valve assembly (10) as claimed in any of the preceding claims which is a self-contained device for fitting in a suction separator tank of floor cleaning machine in the region of a suction port.

14. A wet vacuuming machine, a wet carpet cleaning machine or a wet floor scrubbing machine which includes a vacuum suction drive in fluid communication with a dirty water collection tank via an suction port located in an upper region of the tank, wherein a float valve assembly (10) in accordance with any of the preceding claims is mounted in the tank so as to act to permit closure of the suction port when the tank is full.

15. A machine as claimed in claim 14 wherein the suction port is oriented with an opening (27) which generally faces laterally towards the position of the closure feature (19) when the closure feature is at the limit of its upward travel.

## Patentansprüche

1. Schwimmerventilanordnung (10) für einen Sammelbehälter in einer Saugflüssigkeitssammelvorrichtung, wobei die Anordnung Folgendes umfasst:
einen Schwimmer (13), der in einem Gehäuse (11) eingeschlossen ist, das dazu konfiguriert ist, zu ermöglichen, dass der Schwimmer als Reaktion auf ein steigendes Flüssigkeitsniveau (W) aufsteigt,
einen Kolben (15), der über dem Schwimmer angeordnet ist, um sich in einer Aufwärtsrichtung zu bewegen, wenn der Schwimmer aufsteigt,
ein Verschlussmerkmal (19), das von einem oberen Endbereich des Kolbens nach oben vorsteht, um sich mit dem Kolben aus einer anfänglichen tiefen Stellung in eine obere Stellung nach oben zu bewegen,
wobei ein Saugstutzen (25) in dem Behälter angeordnet ist, der vertikal von dem Verschlussmerkmal beabstandet ist, wenn sich das Verschlussmerkmal in seiner tiefen Stellung befindet, wobei der Saugstutzen mit einem Saugantrieb in Fluidverbindung steht, der im Gebrauch in Luft mitgeführte Flüssigkeit in den Sammelbehälter saugt,
wobei das Verschlussmerkmal (19) durch einen elastischen Verbinder (18) an dem Kolben angebracht ist, der ermöglicht, dass das Verschlussmerkmal in Bezug auf eine vertikale Bewegungsrichtung des Kolbens seitlich verlagert wird,
wobei die Anordnung derart ist, dass, wenn Flüssigkeit den Behälter füllt, die Flüssigkeit auf den Schwimmer (13) wirkt, um das Verschlussmerkmal zu veranlassen, sich in Richtung des Saugstutzens (25) zu bewegen, und, wenn das Verschlussmerkmal ausreichend aufsteigt, das Verschlussmerkmal den Saugstutzen versperrt, wodurch der Saugstutzen verschlossen und weitere in Luft mitgeführte Flüssigkeit am Eindringen gehindert wird.

2. Schwimmerventilanordnung nach Anspruch 1, wobei der elastische Verbinder eine langgestreckte Spiralfeder (18) umfasst.

3. Schwimmerventilanordnung nach Anspruch 1 oder 2, wobei der Saugstutzen (25) in Bezug auf die vertikale Bewegungsrichtung des Kolbens seitlich versetzt ist, sodass, wenn sich der Kolben aufwärts bewegt, das Verschlussmerkmal durch den Luftstrom in den Stutzen seitlich in Richtung des Saugstutzens verlagert werden kann.

4. Schwimmerventilanordnung nach einem der vorangehenden Ansprüche, wobei der Saugstutzen eine röhrenförmige Mündung (27) umfasst und das Verschlussmerkmal eine kugelförmige Oberfläche (19) mit einem Durchmesser, der größer als der Durchmesser der röhrenförmigen Mündung (27) ist, umfasst, sodass die Mündung verschlossen ist, wenn die kugelförmige Oberfläche in der röhrenförmigen Mündung zu sitzen kommt.

5. Schwimmerventilanordnung nach einem der vorangehenden Ansprüche, wobei der Kolben in einem allgemein vertikal ausgerichteten Halsmerkmal (23) aufgenommen ist.

6. Schwimmerventilanordnung nach einem der vorangehenden Ansprüche, wobei der Kolben (15) ein langgestrecktes allgemein zylindrisches Element umfasst.

7. Schwimmerventilanordnung nach einem der vorangehenden Ansprüche, wobei der Kolben ein Anschlagmerkmal, wie etwa eine Endkappe (16) mit Überdurchmesser, zum Verhindern übermäßiger vertikaler Bewegung des Kolbens aufweist.

8. Schwimmerventilanordnung nach einem der vorangehenden Ansprüche, wobei der Schwimmer eine hohl geformte Schale (13) umfasst.

9. Schwimmerventilanordnung nach Anspruch 8, wobei die hohl geformte Schale eine Kugel umfasst.

10. Schwimmerventilanordnung nach Anspruch 9, wobei das Schwimmergehäuse einen Käfig (11) umfasst, in dem die Kugel mit aufsteigender Flüssigkeit ungehindert nach oben schwimmen oder rollen kann.

11. Schwimmerventilanordnung nach einem der vorangehenden Ansprüche, wobei der Schwimmer nicht an dem Kolben angebracht ist und der Schwimmer und der Kolben derart angeordnet sind, dass im Gebrauch der aufsteigende Schwimmer an einem unteren Bereich des Kolbens anstößt, um den Kolben zu veranlassen, sich nach oben zu bewegen.

12. Schwimmerventilanordnung nach einem der Ansprüche 1 bis 10, wobei der Schwimmer zur Bewegung damit an dem Kolben befestigt ist.

13. Schwimmerventilanordnung (10) nach einem der vorangehenden Ansprüche, bei der es sich um eine eigenständige Vorrichtung zum Montieren in einem Saugabscheiderbehälter einer Fußbodenreinigungsmaschine im Bereich eines Saugstutzens handelt.

14. Nasssaugmaschine, Nassteppichreinigungsmaschine oder Nassfußbodenschrubbmaschine, die einen Vakuumsaugantrieb in Fluidverbindung mit einem Schmutzwassersammelbehälter über einen in einem oberen Bereich des Behälters befindlichen Saugstutzen umfasst, wobei eine Schwimmerventilanordnung (10) gemäß einem der vorangehenden Ansprüche in dem Behälter eingebaut ist, um zu wirken, um das Verschließen des Saugstutzens, wenn der Behälter voll ist, zu ermöglichen.

15. Maschine nach Anspruch 14, wobei der Saugstutzen mit einer Öffnung (27) ausgerichtet ist, die allgemein seitlich in Richtung der Lage des Verschlussmerkmals (19) weist, wenn sich das Verschlussmerkmal an der Grenze seiner Bewegung nach oben befindet.

## Revendications

1. Ensemble formant soupape à flotteur (10) pour un réservoir de collecte dans un dispositif de collecte de liquide par aspiration, l'ensemble comportant :
un flotteur (13) confiné dans un boîtier (11) qui est configuré pour permettre au flotteur de s'élever en réponse à une augmentation du niveau de liquide (W),
un piston (15) qui est disposé au-dessus du flotteur de manière à se déplacer dans une direction allant vers le haut quand le flotteur s'élève,
un élément de fermeture (19) faisant saillie vers le haut depuis une région d'extrémité supérieure du piston de manière à se déplacer vers le haut avec le piston, depuis une position initiale basse jusqu'à une position plus haute,
dans lequel un orifice d'aspiration (25) est disposé dans le réservoir à la verticale de manière espacée par rapport à l'élément de fermeture quand l'élément de fermeture est dans sa position basse, l'orifice d'aspiration étant en communication fluidique avec une commande d'aspiration qui, lors de l'utilisation, aspire le liquide entraîné par l'air dans le réservoir de collecte,
dans lequel l'élément de fermeture (19) est fixé au piston par un connecteur élastique (18) qui permet à l'élément de fermeture d'être déplacé latéralement par rapport à une direction allant dans le sens de déplacement vertical du piston,
l'agencement étant tel que, au fur et à mesure que le liquide remplit le réservoir, le liquide agit sur le flotteur (13) pour amener l'élément de fermeture à se déplacer vers l'orifice d'aspiration (25), et quand l'élément de fermeture s'élève suffisamment, l'élément de fermeture vient obturer l'orifice d'aspiration, pour de ce fait fermer l'orifice d'aspiration et empêcher tout autre liquide entraîné par l'air d'entrer.

2. Ensemble formant soupape à flotteur selon la revendication 1, dans lequel le connecteur élastique comporte un ressort hélicoïdal allongé (18).

3. Ensemble formant soupape à flotteur selon la revendication 1 ou la revendication 2, dans lequel l'orifice d'aspiration (25) est décalé latéralement par rapport à la direction allant dans le sens de déplacement vertical du piston de telle sorte que, au fur et à mesure que le piston se déplace vers le haut, l'élément de fermeture peut être déplacé latéralement vers l'orifice d'aspiration par l'écoulement d'air dans l'orifice d'aspiration.

4. Ensemble formant soupape à flotteur selon l'une quelconque des revendications précédentes, dans lequel l'orifice d'aspiration comporte un orifice tubulaire (27) et l'élément de fermeture comporte une surface sphérique (19) ayant un diamètre qui est supérieur au diamètre de l'orifice tubulaire (27), de telle sorte que l'orifice tubulaire est fermé quand la surface sphérique vient se loger dans l'orifice tubulaire.

5. Ensemble formant soupape à flotteur selon l'une quelconque des revendications précédentes, dans lequel le piston est logé dans un élément à étranglement orienté généralement à la verticale (23).

6. Ensemble formant soupape à flotteur selon l'une quelconque des revendications précédentes, dans lequel le piston (15) comporte un élément cylindrique généralement allongé.

7. Ensemble formant soupape à flotteur selon l'une quelconque des revendications précédentes, dans lequel le piston a un dispositif d'arrêt, tel qu'un capuchon d'extrémité ayant un plus grand diamètre (16), pour empêcher tout déplacement vertical excessif du piston.

8. Ensemble formant soupape à flotteur selon l'une quelconque des revendications précédentes, dans lequel le flotteur comporte une coque de forme creuse (13).

9. Ensemble formant soupape à flotteur selon la revendication 8, dans lequel la coque de forme creuse comporte une bille.

10. Ensemble formant soupape à flotteur selon la revendication 9, dans lequel le boîtier de flotteur comporte une cage (11) dans laquelle la bille est libre de flotter ou de rouler vers le haut avec le liquide qui monte.

11. Ensemble formant soupape à flotteur selon l'une quelconque des revendications précédentes, dans lequel le flotteur n'est pas fixé au piston et le flotteur et le piston sont disposés de telle sorte que, lors de l'utilisation, le flotteur qui s'élève vient buter contre une région inférieure du piston de manière à amener le piston à se déplacer vers le haut.

12. Ensemble formant soupape à flotteur selon l'une quelconque des revendications 1 à 10, dans lequel le flotteur est fixé au piston pour se déplacer avec celui-ci.

13. Ensemble formant soupape à flotteur (10) selon l'une quelconque des revendications précédentes, qui est un dispositif autonome destiné à être monté dans un réservoir séparateur d'aspiration d'un appareil de nettoyage de sol dans la région d'un orifice d'aspiration.

14. Appareil aspirateur humide, appareil de nettoyage de moquette humide ou appareil de brossage de sol humide comprenant une commande d'aspiration à vide en communication fluidique avec un réservoir de collecte d'eau sale par le biais d'un orifice d'aspiration situé dans une région supérieure du réservoir, dans lequel un ensemble formant soupape à flotteur (10) selon l'une quelconque des revendications précédentes est monté dans le réservoir de manière à permettre la fermeture de l'orifice d'aspiration quand le réservoir est plein.

15. Appareil selon la revendication 14, dans lequel l'orifice d'aspiration est orienté avec une ouverture (27) qui fait généralement face latéralement à la position de l'élément de fermeture (19) quand l'élément de fermeture se trouve à la limite de son déplacement vers le haut.
